# EUROPEAN PATENT SPECIFICATION

(11) **EP 2 145 801 B1**
(45) Date of publication and mention of the grant of the patent: **12.01.2011**
(21) Application number: 08382029.0
(22) Date of filing: 18.07.2008
(51) Int. Cl.: B60R 21/20

(54) **Device for fixing an airbag module in a motor vehicle**
Vorrichtung zur Befestigung eines Airbagmoduls in einem Fahrzeug
Dispositif de fixation d'un module d'airbag dans un véhicule à moteur

(43) Date of publication of application: 20.01.2010
(73) Proprietor: Dalphi Metal España, S.A., 28006 Madrid (ES)
(72) Inventor: Garcia Eireos, Fernando José, 36213, Vigo, Pontevedra (ES)
(74) Representative: Mehnert, Bernhard

(56) References cited:
- EP-A- 0 771 696
- EP-A- 1 314 620
- EP-A- 1 702 813
- EP-A- 1 705 075
- WO-A-03/051683

## Description

### FIELD OF THE INVENTION

The present invention relates to a device for fixing an airbag module in a motor vehicle and more particularly to a clip-on arrangement.

### PRIOR ART

Many different types of clip-on devices used for fixing airbag modules to motor vehicles are known in the prior art.

Thus, for example, Spanish Utility Model No. 1,040,263 in the name of the same Applicant of the present invention describes means for clipping the airbag module to the steering wheel consisting, on the one hand, of a spring which has one or more points fixed to the casing of the airbag module and, on the other hand, a steering wheel insert which is formed by a body with an arrow head end so as to allow easy introduction thereof inside the container which encloses said spring and which retains it by means of the horizontal section of the said insert. For its part, the steering wheel includes an external access point so that, by means of a screwdriver or the like, it is possible to overcome the resistance of the spring and perform release of the clip-on arrangement and therefore extraction of the insert from the container where it is retained by the spring.

For its part, European Patent Application No. EP 1,179,457 describes means for clipping the airbag module to the steering wheel consisting, on the one hand, of legs fixed to the steering wheel and, on other hand, of a resilient stem arranged inside the casing of the airbag module. In order to unclip the airbag module said resilient stem is deformed by means of a suitable tool.

EP 1 705 075, which is representative of the closest prior art discloses an arrangement for fixing an airbag device in a motor vehicle according to the preamble of claim 1.

These devices, like many others which could be mentioned, are based on the same basic principles of any clip-on device, i.e. the interaction of a rigid part with a resilient part (typically a spring), but are intended for different end uses.

The motor vehicle industry is continually requiring new clip-on devices which are able to improve the assembly operations which are performed during manufacture of motor vehicles and this requirement exists in particular with regard to the assembly of airbag modules.

The present invention aims to satisfy this requirement.

### SUMMARY OF THE INVENTION

One object of the present invention is to provide a clip-on fixing arrangement for an airbag module in a motor vehicle which reduces to a minimum the amount of effort required to perform the clip-on operation and, where applicable, unclipping operation.

Another object of the present invention is to provide a clip-on fixing arrangement for an airbag module in a motor vehicle using a spring which has a cross-section which is optimized from the point of view of resistance.

Another object of the present invention is to provide a clip-on fixing arrangement for an airbag module in a motor vehicle which allows surface contact between the rigid part and the resilient part, achieving in this way a more secure clip-on action.

This object, together with others, is achieved by means of an arrangement for fixing an airbag module in a motor vehicle by means of cooperating members situated therein, the first member comprising a clip-in hook and the second member a clip-in plate with an opening, a spring with two parallel arms and first and second means for delimiting the movement of the spring when actuated by the clip-in hook, which allow the fixing operation to be performed by rotating firstly the spring in the plane of the clip-in plate, while keeping its two arms parallel, and secondly by bending one of these arms in order to retain the clip-in hook.

In a preferred embodiment of the present invention the cross-section of the spring has a rectangular shape. This thereby results in an arrangement for fixing an airbag module in a motor vehicle with a spring which is optimized structurally.

In another preferred embodiment of the invention said first means for delimiting the movement of the spring consist in "bridge pieces" (at least one "bridge piece"), the uprights of which act as stops for the movement of the spring and said second means for delimiting the movement of the spring are two parts for positioning the open side of the spring and a part for positioning the closed side of the spring. This thereby results in an arrangement for fixing an airbag module in a motor vehicle which is very secure.

In another preferred embodiment of the invention the spring has "wings" at its ends, forming an obtuse angle with the arms of the spring. This thereby results in optimized functioning of the spring during the clip-on operation.

Other characteristic features and advantages of the present invention will emerge from the following detailed description of an example of embodiment, which is in no way limiting, of the subject thereof with reference to the accompanying drawings.

### DESCRIPTION OF THE FIGURES

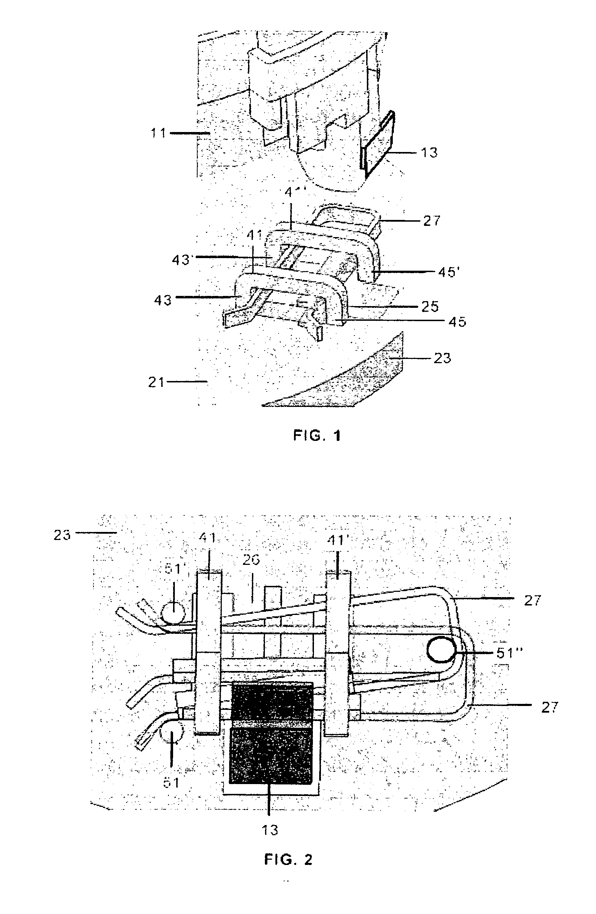

Figure 1 is a schematic perspective view of an arrangement for fixing an airbag module in a motor vehicle according to a preferred embodiment of the present invention.
Figure 2 is a schematic plan view of an arrangement for fixing an airbag module in a motor vehicle according to a preferred embodiment of the present invention, showing the three positions of the spring during the fixing operation.
Figures 3a, 3b and 3c are partial schematic plan views (without the clip-in hook) of an arrangement for fixing an airbag module in a motor vehicle according to a preferred embodiment of the present invention, which show separately the three said positions of the spring during the fixing operation.

### DETAILED DESCRIPTION OF THE INVENTION

In the preferred embodiment of the invention which will be described in detail below the arrangement for fixing the airbag module in the motor vehicle comprises a first member 11, situated in the airbag module, with a clip-in hook 13 - the rigid part of the clip-on mechanism - and a second member 21, situated in the motor vehicle, consisting of a clip-in plate 23 with an opening 25 inside which the clip-in hook must be engaged and a spring 27 - the resilient part of the clip-on mechanism - for retaining the clip-in hook 13.

The clip-in plate 23 has two types of means for delimiting the position and the movement of the spring 27:
- first means 41, 41' with a bridge-like form for ensuring that the movement of the spring 27 occurs in a plane substantially parallel to the clip-in plate 23, the uprights 43, 45; 43', 45' of which perform the function of stops delimiting the movement of the spring 27 in said plane;
- second means 51, 51', 51" in the form of studs acting as bearing points for the spring 27 and means for controlling the displacement thereof.

The bridge pieces 41, 41' are situated around the opening 25 and the studs 51, 51', 51" are situated on the outside thereof, the pair of studs 51, 51' being situated close to the bridge piece 41 in the zone envisaged for the open side of the spring 27 and the stud 51' being situated in the zone envisaged for the closed side of the spring 27. In the embodiment shown in the Figures, a fixing arrangement with two bridge pieces 41, 41' has been shown, but for the purposes of the present invention a single bridge piece 41 would be sufficient for performing the abovementioned function.

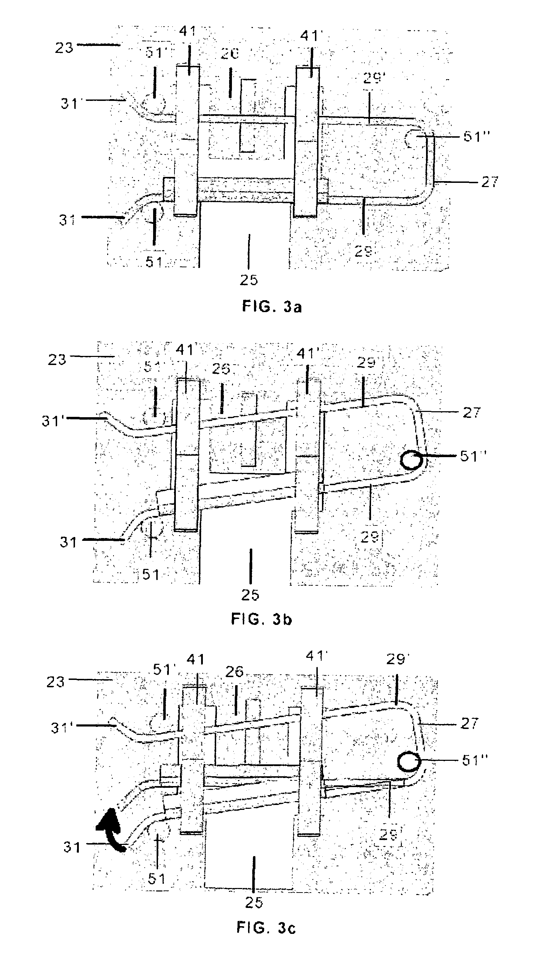

The spring 27, which is formed by arms 29, 29' and extensions 31, 31' forming an obtuse angle with the arms 29, 29' is mounted on the plate 23 so that it remains located in the position shown in Figure 3a with its arms 29, 29' parallel. The points where the spring 27 bears against the studs 51, 51', 51" ensure that it is kept adequately tensioned. For its part, it can be seen that the distance between the stops 43, 45; 43', 45' of the bridge pieces 41, 41' is greater than the width of the spring 27 which provides it with the necessary play so that it may be easily mounted on the plate 23 in the manner indicated.

The extensions or "wings" 31, 31' of the spring 27 have two functions:
- increasing the resistance of the spring 27 in this zone so that it does not buckle and bend when subject to the stresses produced by opening of the airbag; the shearing force is also increased; this is a zone subject to enormous mechanical stress;
- facilitating displacement of the spring 27 upon entering into contact with the hook 13.

Figures 3b and 3c show the final positions of the spring 27 during the two movements of the spring 27 which occur during the clip-on operation.

Figure 3b shows the position of the spring 27 after coming into contact with the clip-in hook 13. As a result of this contact, the spring 27 rotates around the stud 51 until it comes into contact with the stop 43' of the bridge piece 41'.

Figure 3c shows the movement of the spring 27 when pressure is exerted on it by the clip-in hook 13 upon engagement inside the opening 25. As a result of this pressure, the arm 29 of the spring 27 rotates about the stud 51" and thereby acquires sufficient tension to retain the clip-in hook 13.

Owing to this double movement of the spring 27, namely a first rotational movement caused by the clip-in hook 13 when the clip-on operation starts and a second movement involving bending of the arm 29 when the clip-in hook 13 is engaged inside the opening 25, during which the clip-in hook 13 applies a force on top of the spring 27, with the maximum lever arm possible, it is possible to reduce as far as possible the force required to perform the clip-on operation without the need for the clip-in hook 13 to have a special asymmetrical geometry.

As can be seen in the figures, the spring 27 used in the preferred embodiment illustrated therein has a rectangular shaped cross-section instead of the customary circular cross-section of springs used in clip-on devices. This rectangular cross-section ensures a high resistance in the direction in which the mechanical stresses act and, at the same time, a very small force needed to bend the spring during the clip-on operation. In turn, it provides surface contact with the hook instead of the linear contact of a spring with a circular cross-section.

As will be clear to a person skilled in the art the present invention also comprises an arrangement for fixing the airbag module in a motor vehicle in which the rigid member of the clip-on mechanism, namely the first member 11 with the clip-in hook 13, is situated in the motor vehicle and the flexible part of the clip-on mechanism, namely the clip-in plate 23 with the opening 25 inside which the clip-in hook 13 must be engaged and the spring 27, is situated in the airbag module.

An advantage of the present invention is that the clip-on device forming the subject thereof allows a reduction in the force required for assembly, while increasing the resistance in the direction of opening of the airbag.

Another advantage of the present invention is that the clip-on device forming the subject thereof allows the spring part which engages with the hook to be kept parallel thereto after the clip-on operation, increasing the resistance of the hook since the shearing section is kept in the vertical zone, thereby making the clip-on arrangement more secure.

Another advantage of the present invention is that the clip-on device forming the subject thereof allows a reduction of the force necessary for assembly of the airbag module in the vehicle without it being necessary for the clip-in hook to have a complicated asymmetrical shape.

Another advantage of the present invention is that, by using a spring with a rectangular cross-section, the section of the spring is optimized with a maximum reduction of its weight.

Another advantage of the present invention is that using a spring with a rectangular cross-section results in a surface contact zone between the clip-in hook and the spring instead of the linear contact zone of springs with a circular cross-section, thereby avoiding the concentration of tensioning forces which would reduce the resistance of the clip-in hook.

Although various embodiments of the invention have been described and illustrated, it is obvious that modifications included within the scope of the said invention may be made thereto, whereby said scope must not be regarded as being limited to said embodiments, but to the contents of the following claims.

## Claims

1. Arrangement for fixing an airbag module in a motor vehicle by means of cooperating members (11, 21) situated therein, the first member (11) comprising a clip-in hook (13) and the second member (21) a clip-in plate (23) with an opening (25), and a spring (27) with two parallel arms (29, 29') so that said fixing operation is performed by engaging said hook (13) inside said opening (25) and retaining it there by means of said spring (27), **characterized in that** the clip-in plate (23) comprises first means (41, 41') and second means (51, 51', 51") for delimiting the movement of the spring (27) when actuated by the clip-in hook (13), **characterised in that** said first and second means allow the fixing operation to be performed by rotating firstly the spring (27) in the plane of the clip-in plate (23), while keeping its two arms (29, 29') parallel, and secondly by bending one of these arms (29) in order to retain the clip-in hook (13).

2. Arrangement for fixing an airbag module in a motor vehicle according to Claim 1, **characterized in that** the cross-section of the spring (27) has a rectangular shape.

3. Arrangement for fixing an airbag module in a motor vehicle according to any one of Claims 1 and 2, **characterized in that** said first means (41, 41') comprises at least one pair of stops (43, 45; 43', 45') which are situated at a distance from each other greater than the distance existing between the arms (29, 29') of the spring (27).

4. Arrangement for fixing an airbag module in a motor vehicle according to Claim 3, **characterized in that** said first means (41, 41') comprise two pairs of stops (43, 45; 43', 45') which are aligned, on both sides of the opening (25), in a direction perpendicular to that of the arms (29, 29') of the spring (27).

5. Arrangement for fixing an airbag module in a motor vehicle according to any one of Claims 1 to 4, **characterized in that** said second means (51, 51', 51") comprise two positioning parts (51, 51') for the open side of the spring (27) and a positioning part (51") for the closed side of the spring (27) which are arranged on the outside of said pairs of stops (43, 45; 43', 45'), respectively.

6. Arrangement for fixing an airbag module in a motor vehicle according to any one of Claims 1 to 5, **characterized in that** the arms (29, 29') of the spring (27) terminate in extensions (31, 31') forming an obtuse angle therewith and around said two positioning parts (51, 51') for the open side of the spring (27).

7. Arrangement for fixing an airbag module in a motor vehicle according to any one of Claims 1 to 6, **characterized in that** said first member (11) is situated in the airbag module and said second member (21) is situated in the motor vehicle.

8. Arrangement for fixing an airbag module in a motor vehicle according to any one of Claims 1 to 6, **characterized in that** said first member (11) is situated in the motor vehicle and said second member (21) is situated in the airbag module.

## Patentansprüche

1. Anordnung zur Befestigung eines Airbagmoduls in einem Kraftfahrzeug mittels darin untergebrachter, zusammenwirkender Elemente (11, 21), wobei das erste Element (11) einen Einrasthaken (13) und das zweite Element (21) eine Einrastplatte (23) mit einer Öffnung (25) sowie eine Feder (27) mit zwei parallelen Armen (29, 29') umfasst, so dass der Befestigungsvorgang **dadurch** erfolgt, dass der Haken (13) in die Öffnung (25) eingreift und dort mittels der Feder (27) festgehalten wird, **dadurch gekennzeichnet, dass** die Einrastplatte (23) erste Einrichtungen (41, 41') und zweite Einrichtungen (51, 51', 51") zur Begrenzung der Bewegung der Feder (27) umfasst, wenn diese von dem Einrasthaken (13) betätigt wird, **dadurch gekennzeichnet, dass** die ersten und zweiten Einrichtungen die Ausführung des Befestigungsvorganges ermöglichen, indem zunächst die Feder (27) in der Ebene der Einrastplatte (23) gedreht wird, während ihre beiden Arme (29, 29') parallel gehalten werden, und danach einer dieser Arme (29) abgewinkelt wird, um den Einrasthaken (13) festzuhalten.

2. Anordnung zur Befestigung eines Airbagmoduls in einem Kraftfahrzeug gemäß Anspruch 1, **dadurch gekennzeichnet, dass** der Querschnitt der Feder (27) eine rechteckige Form aufweist.

3. Anordnung zur Befestigung eines Airbagmoduls in einem Kraftfahrzeug gemäß einem der Ansprüche 1 und 2, **dadurch gekennzeichnet, dass** die ersten Einrichtungen (41, 41') mindestens ein Paar Anschläge (43, 45; 43', 45') umfassen, welche in einem größeren Abstand zueinander angebracht sind als dem Abstand zwischen den Armen (29, 29') der Feder (27).

4. Anordnung zur Befestigung eines Airbagmoduls in einem Kraftfahrzeug gemäß Anspruch 3, **dadurch gekennzeichnet, dass** die ersten Einrichtungen (41, 41') zwei Paar Anschläge (43, 45; 43', 45') umfassen, welche beidseitig der Öffnung (25) in einer Richtung senkrecht zur Richtung der Arme (29, 29') der Feder (27) ausgerichtet sind.

5. Anordnung zur Befestigung eines Airbagmoduls in einem Kraftfahrzeug gemäß einem der Ansprüche 1 bis 4, **dadurch gekennzeichnet, dass** die zweiten Einrichtungen (51, 51', 51") zwei Positionierteile (51, 51') für die offene Seite der Feder (27) sowie ein Positionierteil (51") für die geschlossene Seite der Feder (27) umfassen, welche jeweils an der Außenseite der Anschlagspaare (43, 45; 43', 45') angeordnet sind.

6. Anordnung zur Befestigung eines Airbagmoduls in einem Kraftfahrzeug gemäß einem der Ansprüche 1 bis 5, **dadurch gekennzeichnet, dass** die Arme (29, 29') der Feder (27) in Verlängerungen (31, 31') enden, welche einen stumpfen Winkel mit diesen und um die beiden Positionierteile (51, 51') für die offene Seite der Feder (27) bilden.

7. Anordnung zur Befestigung eines Airbagmoduls in einem Kraftfahrzeug gemäß einem der Ansprüche 1 bis 6, **dadurch gekennzeichnet, dass** das erste Element (11) in dem Airbagmodul untergebracht ist und das zweite Element (21) in dem Kraftfahrzeug untergebracht ist.

8. Anordnung zur Befestigung eines Airbagmoduls in einem Kraftfahrzeug gemäß einem der Ansprüche 1 bis 6, **dadurch gekennzeichnet, dass** das erste Element (11) in dem Kraftfahrzeug untergebracht ist und das zweite Element (21) in dem Airbagmodul untergebracht ist.

## Revendications

1. Dispositif de fixation d'un module d'airbag d'un véhicule automobile par le biais de composants interagissants (11,21) s'y situant, le premier composant (11) comprenant un crochet à cliper (13) et le second composant (21) une plaque à cliper (23) avec une ouverture (25), et un ressort (27) avec deux bras parallèles (29, 29 ') de sorte que ladite opération de fixation est effectuée en engageant ledit crochet (13) à l'intérieur de ladite ouverture (25) et assurant son maintien par le biais dudit ressort (27), **caractérisé en ce que** la plaque à cliper (23) comporte des premiers moyens (41, 41 ') et des seconds moyens (51, 51', 51 ") pour délimiter le mouvement du ressort (27) quand il est actionné par le crochet à cliper (13), **caractérisé en ce que** lesdits premiers et seconds moyens permettent d'effectuer l'opération de fixation par, en premier, une rotation du ressort (27) dans le plan de la plaque à cliper (23), tout en maintenant ses deux bras (29, 29') parallèles, et deuxièment en pliant un de ces bras (29) afin de maintenir le crochet à cliper (13).

2. Dispositif de fixation d'un module d'airbag d'un véhicule automobile selon la revendication 1, **caractérisé en ce que** la section transversale du ressort (27) a une forme rectangulaire.

3. Dispositif de fixation d'un module d'airbag d'un véhicule automobile selon l'une quelconque des revendications 1 et 2, **caractérisé en ce que** lesdits premiers moyens (41, 41') comprennent au moins une paire de butées (43, 45, 43', 45') qui sont séparées par une distance entre elles supérieure à la distance existant entre les bras (29, 29 ') du ressort (27).

4. Dispositif de fixation d'un module d'airbag d'un véhicule automobile selon la revendication 3, **caractérisé en ce que** lesdits premiers moyens (41, 41') comportent deux paires de butées (43, 45, 43', 45') qui sont alignées des deux côtés de l'ouverture (25), dans une direction perpendiculaire à celle des bras (29, 29') du ressort (27).

5. Dispositif de fixation d'un module d'airbag d'un véhicule automobile selon l'une quelconque des revendications 1 à 4, **caractérisé en ce que** lesdits deuxièmes moyens (51, 51', 51") comprennent deux parties de positionnement (51, 51') du côté ouvert du ressort (27) et une partie de positionnement (51 ") du côté fermé du ressort (27) qui sont disposées respectivement à l'extérieur des paires de butées (43, 45, 43', 45').

6. Dispositif de fixation d'un module d'airbag d'un véhicule automobile selon l'une quelconque des revendications 1 à 5, **caractérisé en ce que** les bras (29, 29') du ressort (27) se terminent par des extensions (31, 31') formant un angle obtus et venant autour des dites deux parties de positionnement (51, 51 ') du côté ouvert du ressort (27).

7. Dispositif de fixation d'un module d'airbag d'un véhicule automobile selon l'une quelconque des revendications 1à 6, **caractérisé en ce que** ledit premier composant (11) est situé dans le module d'airbag et le second composant (21) est situé dans le véhicule automobile.

8. Dispositif de fixation d'un module d'airbag d'un véhicule automobile selon l'une quelconque des revendications 1 à 6, **caractérisé en ce que** ledit premier composant (11) est situé dans le véhicule automobile et le second composant (21) est situé dans le module d'airbag.
